# EUROPÄISCHE PATENTANMELDUNG

(11) **EP 3 711 646 A1**
(43) Veröffentlichungstag der Anmeldung: **23.09.2020**
(21) Anmeldenummer: 19164276.8
(22) Anmeldetag: 21.03.2019
(51) Int. Cl.: A47L 9/02

(54) **VORRICHTUNG ZUM ABSAUGEN VON BOHRSCHLAMM AUS EINER BODENSCHIENE EINER TROCKENBAUWAND UND IHRE VERWENDUNG**

(71) Anmelder: Hilti Aktiengesellschaft, 9494 Schaan (LI)
(72) Erfinder: Barbier, Lionel, 80805 München (DE); Franz, Stefan, 86477 Adelsried (DE); Holzmeier, Georg, 86748 Marktoffingen (DE); Mazur, Matthias, 20359 Hamburg (DE); Fally, Paul, 22085 Hamburg (DE); Sever, Eduard, 6713 Ludesch (AT)
(74) Vertreter: Hilti Aktiengesellschaft Corporate Intellectual Property

(57) **Zusammenfassung**

Die vorliegende Erfindung betrifft eine Vorrichtung zum Absaugen von Bohrschlamm aus einer Bodenschiene einer Trockenbauwand und die Verwendung der Vorrichtung. Die Absaugvorrichtung weist einen Grundköper auf, der an seiner Unterseite einen Hohlraum aufweist, der mit einem Unterdruck beaufschlagbar ist, so dass der im Hohlraum anfallende Bohrschlamm mit einer Saugvorrichtung aus dem Hohlraum abgesaugt werden kann. Ferner weist der Grundkörper eine Absaugöffnung auf, die in den Hohlraum des Grundkörpers mündet.

## Beschreibung

Die vorliegende Erfindung betrifft eine Vorrichtung zum Absaugen von Bohrschlamm aus einer Bodenschiene einer Trockenbauwand und die Verwendung der Vorrichtung. Die Absaugvorrichtung weist einen Grundköper auf, der an seiner Unterseite einen Hohlraum aufweist, der mit einem Unterdruck beaufschlagbar ist, so dass der im Hohlraum anfallende Bohrschlamm mit einer Saugvorrichtung aus dem Hohlraum abgesaugt werden kann. Ferner weist der Grundkörper eine Absaugöffnung auf, die in den Hohlraum des Grundkörpers mündet.

Für das Kernbohren in mineralischen Untergründen wird in der Regel ein Kernbohrsystem verwendet, bei dem Wasser zugeführt wird, um eine Kühlung der Bohrkrone und ein Ausspülen des anfallenden Bohrmehls aus dem Bohrloch zu erreichen. Der daraus resultierende Bohrschlamm, der insbesondere eine Mischung aus dem Bohrmehl und der zugeführten Flüssigkeit darstellt, ist in aller Regel unerwünscht, da seine Verbreitung zu Wasserschäden führen kann. Solche Wasserschäden sollen insbesondere bei Renovierungsarbeiten in bewohnten Objekten vermieden werden. Im Stand der Technik sind eine Reihe von Lösungen bekannt, wie das entstehende Bohrwasser bzw. der Borschlamm aufgesammelt bzw. abgesaugt werden kann. Diese Systeme basieren zumeist auf einer Art Wasser(auf)fangring, der verhindern soll, dass sich das Bohrwasser unkontrolliert ausbreitet. Gleichzeitig soll das Bohrwasser aus dem von dem Auffangring erzeugten Reservoir abgesaugt werden können.

In einigen Fällen ist es erwünscht, eine Kernbohrung an einer Stelle im Bauobjekt durchzuführen, an der eine Trockenbauwand aufgestellt werden soll. Dadurch kann bei anschließenden Arbeiten das Verlegen von Leitungen und/oder Rohre in der Trockenbauwand wesentlich vereinfacht werden. Die Trockenbauwand umfasst vorzugsweise zwei Paneele, zwischen denen die Leitungen und/oder Rohre verlegt werden sollen. Üblicherweise werden Trockenbauwände mit sogenannten Boden- oder Trockenbauschienen am Boden fixiert. Anschließend wird eine (Kern-)Bohrung direkt durch die Schiene und den Boden durchgeführt. Für die Durchführung von Kernbohrarbeiten unter Verwendung von Kühl- und/oder Spülwasser können die konventionellen Auffangringe, die aus dem Stand der Technik bekannt sind, nicht verwendet werden, da sie in Verbindung mit den starren Bodenschienen nicht ausgelegt und angewendet werden können. Insbesondere können die bekannten Systeme nicht innerhalb der Bodenschiene platziert werden. Häufig wird daher in der Praxis die Kernbohrung ohne Wasserfang vorgenommen und ein Volllaufen der Trockenbauschiene mit Bohrwasser - sowie ein späterer Wasserschaden in der Trockenbauwand - in Kauf genommen.

Darüber hinaus weisen die aus dem Stand der Technik bekannten System zusätzliche Nachteile auf, da sie zumeist aufgrund der vielen erforderlichen Einzelteile sehr kostenintensiv sind und häufig eine sehr aufwändige Montage am gewünschten Einsatzort erforderlich machen. Dies erschwert die Handhabung der konventionellen Systeme und reduziert nachteiligerweise die Akzeptanz bei den Nutzern.

Die Aufgabe, die der vorliegenden Erfindung zugrunde liegt, besteht darin, die vorstehend beschriebenen Nachteile des Standes der Technik zu überwinden und eine Absaugvorrichtung bereitzustellen, die in Verbindung mit einer Bodenschiene einer Trockenbauwand verwendet werden kann und eine effiziente Absaugung des Bohrschlamms aus einer Bodenschiene ermöglicht. Die bereitzustellende Absaugvorrichtung soll einfach in der Anwendung sein und möglichst kostengünstig hergestellt werden können. Insbesondere soll die Erfindung dem Anwender erlauben, sauber in Trockenbauschienen Kernbohrungen mit Wasser durchzuführen. Zusätzlich wäre es wünschenswert, wenn die bereitzustellende Vorrichtung schnell und unaufwändig am gewünschten Einsatzort zu montieren ist bei gleichzeitig geringen Anwendungskosten für das Bauunternehmen oder den Bauherrn.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

Erfindungsgemäß ist eine Vorrichtung zum Absaugen von Bohrschlamm aus einer Bodenschiene einer Trockenbauwand vorgesehen. Diese Absaugvorrichtung ist dadurch gekennzeichnet, dass die Vorrichtung einen Grundköper aufweist, wobei der Grundkörper an einer Unterseite einen Hohlraum aufweist, der mit einem Unterdruck beaufschlagbar ist, so dass der im Hohlraum anfallende Bohrschlamm mit einer Saugvorrichtung aus dem Hohlraum absaugbar ist, wobei der Grundkörper ferner eine Absaugöffnung aufweist, die auf der Unterseite des Grundkörpers in den Hohlraum mündet. Die Vorrichtung wird im Sinne der Erfindung insbesondere auch als Absaugvorrichtung bezeichnet und kann vorteilhafterweise als Bodendüse zum Aufsaugen von nassen oder feuchten Bohrschlamm verwendet werden.

Es ist im Sinne der Erfindung bevorzugt, dass die Absaugvorrichtung über die Absaugöffnung mit einer Saugvorrichtung verbunden werden kann. Dazu kann der obere Bereich der Absaugöffnung mit einem Saugschlauch einer Saugvorrichtung verbunden werden. Vorzugsweise ist die Absaugöffnung somit mit einer Saugvorrichtung verbindbar. Es ist im Sinne der Erfindung insbesondere bevorzugt, dass es sich bei der Saugvorrichtung um einen sogenannten Nass-Sauger handelt oder um ein *Water Management* System, das häufig in Verbindung mit Kernbohrgeräten verwendet wird. Nass-Sauger sind vorzugsweise dazu eingerichtet, insbesondere nassen oder feuchten Bohrschlamm aufzunehmen und/oder aufzusaugen. Beispielsweise kann auch ein kombinierter Nass- und Trockensauger zum Aufsaugen des vorzugsweise feuchten Bohrschlamms verwendet werden. Vorzugsweise kann der Unterdruck, mit dem der Hohlraum des Grundkörpers beaufschlagt werden kann, mit der Saugvorrichtung erzeugt werden, wobei der Unterdruck mit dem Saugschlauch durch die Absaugöffnung in den Hohlraum der Absaugvorrichtung geleitet werden kann.

Es ist im Sinne der Erfindung bevorzugt, dass der Hohlraum im Anwendungsfall, d.h. bei Verwendung der Absaugvorrichtung, mit der Bodenschiene der Trockenbauwand einen geschlossenen Absaugraum bildet, aus dem der Bohrschlamm abgesaugt werden kann. Der geschlossene Absaugraum ist insbesondere luftdicht ausgebildet, wobei die Abdichtung des geschlossenen Volumens vorzugsweise einem gewissen Unterdruck standhält bzw. einen gewissen Unterdruck toleriert, ohne dass die Abdichtung versagt. Wenn die Absaugvorrichtung in der Bodenschiene der Trockenbauwand platziert ist, wird die Unterseite des geschlossenen Absaugraums bzw. des Hohlraums vorzugsweise von der Bodenschiene gebildet. Der Hohlraum wird vorzugsweise von einer Aussparung im Grundkörper der Absaugvorrichtung gebildet, die zunächst nach unten, d.h. auf der Unterseite, offen ist. Durch das Einlegen der Absaugvorrichtung wird der Hohlraum geschlossen und vorzugsweise zu dem geschlossenen Absaugraum, der mit einem Unterdruck beaufschlagt und aus dem der Bohrschlamm herausgesaugt werden kann. Der Unterdruck in dem Hohlraum sorgt vorzugsweise in einem ersten Schritt dafür, dass sich die Absaugvorrichtung an dem Boden der Schiene festsaugt, wodurch eine Abdichtung bewirkt und der geschlossene Absaugraum gebildet wird. Insbesondere wird dadurch die Boden- bzw. Grundfläche des Grundkörpers abgedichtet.

Vorzugsweise stellt die Absaugöffnung eine im Wesentlichen zylinderförmige Öffnung oder Bohrung innerhalb des Grundkörpers dar. In einer ganz besonders bevorzugten Ausführungsform der Erfindung kann die Absaugöffnung konisch ausgebildet sein. Dadurch wird vorteilhafterweise eine verbesserte Abdichtung zwischen dem zumeist ebenfalls konisch ausgebildeten Saugschlauchende und der Vorrichtung gewährleistet. Die Absaugöffnung ist insbesondere als durchgehende Bohrung oder Öffnung ausgebildet, die auf der Unterseite des Grundkörpers in den Hohlraum einmündet. Die Absaugöffnung kann an ihrem oberen Ende mit einer Saugvorrichtung verbunden werden. Dies kann vorzugsweise mit einem Saugschlauch der Saugvorrichtung erfolgen. Der Unterdruck, der mit der Saugvorrichtung erzeugt wird, kann mit Hilfe des Saugschlauchs in den Hohlraum des Grundkörpers der Absaugvorrichtung geleitet werden. Vorzugsweise weist die Absaugöffnung glatte Innenwände auf, damit der Bohrschlamm nicht an etwaigen Kanten oder Unebenheiten anhaftet.

Es ist im Sinne der Erfindung bevorzugt, dass die Absaugöffnung in Bezug auf eine im Wesentlichen plane Unterseite der Absaugvorrichtung geneigt ausgebildet ist. Vorzugsweise spannt die Unterseite der Absaugvorrichtung eine Ebene auf, mit der eine virtuelle Achse, die vorzugsweise zentral innerhalb der Absaugöffnung angeordnet ist, einen Neigungswinkel einschließt. Der Neigungswinkel kann vorzugsweise in einem Bereich von 0 bis 90 Grad liegen, bevorzugt bei 10 bis 80 Grad.

Die Neigung der Absaugöffnung ist hilfreich bei der Verwendung der Absaugvorrichtung in Verbindung mit einem Kernbohrgerät und einem Nass-Sauger bzw. einem *Water Management-*System, da die unterschiedlichen Geräte anderenfalls einander im Weg sein oder einander behindern könnten, wodurch die Handhabung der Geräte miteinander erschwert würde. Durch die Neigung der Absaugöffnung verläßt der Saugschlauch der Saugvorrichtung bzw. des *Water Management-System* die Absaugvorrichtung in einem Winkel und weist damit von dem im Wesentlichen senkrecht auf der Unterseite der Absaugvorrichtung stehenden Bohrer des Kernbohrgeräts weg. Vorzugsweise weist die Absaugöffnung durch die Neigung der virtuellen zentralen Achse in Richtung einer Hinter- oder Rückseite der Absaugvorrichtung.

In einem Ausführungsbeispiel der Erfindung ist es bevorzugt, dass die die Absaugvorrichtung einen Grundköper aufweist, wobei der Grundkörper an einer Unterseite einen Hohlraum aufweist, der im Falle, dass die Absaugvorrichtung verwendet wird, mit der Bodenschiene der Trockenbauwand einen geschlossenen Absaugraum bildet, wobei der geschlossene Absaugraum so mit einem Unterdruck beaufschlagbar ist, dass der im Hohlraum anfallende Bohrschlamm aus dem Absaugraum mit einer Saugvorrichtung abgesaugt werden kann, wobei der Grundkörper darüber hinaus eine Absaugöffnung zur Verbindung der Vorrichtung mit einer Saugvorrichtung aufweist, wobei die Absaugöffnung auf der Unterseite des Grundkörpers in dem Hohlraum mündet.

Die Absaugvorrichtung kann vor dem Bohrbeginn vorzugsweise genau passend in die Trockenbauschiene eingelegt werden. Die vorgeschlagene Absaugvorrichtung hat an der Bodenseite einen Hohlraum, welcher zwischen der Trockenbauschiene und der Vorrichtung gebildet wird und der beim Anschließen eines Nass-Saugers oder eines *Water Management-Systems* an der dafür vorgesehenen Öffnung einen Unterdruck bildet. Zusätzlich ist die Oberseite des Grundkörpers der Absaugvorrichtung so gestaltet, dass der Anwender diese Fläche als Niederhaltefläche nutzen kann. Dies verhindert ein unerwünschtes Ablösen vor allem beim Beginn des Bohrvorgangs.

Vorzugsweise ist die Absaugvorrichtung aus einem festem Schaumstoff gefertigt. Mit anderen Worten ist es im Sinne der Erfindung bevorzugt, dass der Grundkörper der Absaugvorrichtung einen bevorzugt harten Schaumstoff umfasst oder aus diesem gebildet ist. Dadurch kann die Absaugvorrichtung besonders kostengünstig in Massenherstellungsverfahren hergestellt werden. Darüber hinaus weist die so erhaltene Absaugvorrichtung aus Schaumstoff ein geringes Gewicht auf und kann leicht auf einer Baustelle mitgeführt werden. Es ist im Sinne der Erfindung bevorzugt, dass der Schaumstoff ein geschäumtes Polypropylen (PP) oder ein Thermoplast ist. Es ist im Sinne der Erfindung bevorzugt, dass sich der Schaumstoff gut und einfach durchbohren lässt, ohne an den Rändern auszufransen oder beim Anbohren zu brechen. Darüber hinaus ist es vorgesehen, einen Schaumstoff zu verwenden, der vorteilhafterweise das im Bohrschlamm enthaltenen Wasser nicht aufsaugt. Mit anderen Worten ist der für die Vorrichtung vorgesehene Schaumstoff nicht saugfähig ausgebildet.

Es ist im Sinne der Erfindung bevorzugt, dass auf einer Oberseite des Grundkörpers eine Zentrierhilfe für eine Positionierung des Kernbohrgeräts angeordnet ist. Die Zentrierhilfe kann ähnlich wie eine Zielscheibe ausgebildet sein, wobei ein Mittelpunkt der Zentrierhilfe insbesondere mittig auf der Oberseite des Grundkörpers angeordnet ist. Der Begriff "mittig" bezieht sich in diesem Zusammenhang insbesondere auf eine Mittelposition zwischen den Seitenflächen der vorgeschlagenen Absaugvorrichtung. Die Zentrierhilfe ist vorzugsweise dazu eingerichtet, den Bohrer eines Kernbohrgeräts so auszurichten, dass er die Bodenschiene der Trockenbauwand und den darunterliegenden Untergrund in Bezug auf die Bodenschiene mittig durchbohrt. Das entstehende Bohrloch weist somit vorzugsweise im Wesentlichen gleiche Abstände zu den Seitenflächen der Absaugvorrichtung auf. Die Zentrierhilfe kann ferner konzentrische Kreise umfassen, die die optimale Bohrposition für unterschiedliche Bohrer-Durchmesser angeben können. Vorzugsweise korrespondieren die konzentrischen Kreise jeweils mit einem bestimmten, standardisierten Bohrer-Durchmesser. Der Bohrer eines Kernbohrgeräts wird vorzugsweise so auf der Oberseite des Grundkörpers positioniert, dass der Bohrer in einem mittleren Bereich der Zentrierhilfe aufgesetzt wird. Die Oberseite des Grundkörpers ist im Bereich der Zentrierhilfe vorzugsweise im Wesentlichen eben ausgebildet. Vorzugsweise wird der Bohrer des Kernbohrgeräts im Wesentlichen senkrecht zu dieser ebenen Oberseite der Absaugvorrichtung auf den Grundkörper aufgesetzt, so dass der Bohrvorgang vorteilhafterweise senkrecht zu der Oberfläche bzw. der Fläche der Bodenschiene erfolgt. Kurz bevor die Trockenbauschiene angebohrt wird, kann die Wasserzufuhr des Kernbohrers zugeschaltet werden. Das anfallende Wasser kann vorteilhafterweise durch die Absaugöffnung abgesaugt werden.

Ein zusätzlicher Vorteil der vorgeschlagenen Absaugvorrichtung ist, dass der mit dem Kernbohrgerät erzeugte Durchbruch vorzugsweise den gleichen Durchmesser wie der verwendete Bohrer hat. Dies ist vorteilhaft, weil zwischen dem Kernbohrer und der Absaugvorrichtung dadurch eine Dichtfläche entsteht, an der vorzugsweise kein Bohrwasser austreten kann. Das Bohrwasser, das während des Bohrvorgangs anfällt, wird besonders effektiv durch die Absaugöffnung abgesaugt. Die Absaugvorrichtung ist vorzugsweise so ausgestaltet, dass sie mehrfach für die gleichen oder für aufsteigende Bohrdurchmesser verwendet werden kann. Dadurch ist sie insbesondere wiederverwertbar, so dass mit der Erfindung vorteilhafterweise auch ein Beitrag zum Umweltschutz geleistet wird.

Es ist im Sinne der Erfindung bevorzugt, dass die Absaugvorrichtung Aussparungen aufweist, die vorzugsweise als Handgriffe ausgebildet sind und die es dem Anwender der Absaugvorrichtung erlauben, die den Grundkörper der Absaugvorrichtung besonders einfach vom Boden bzw. aus der Bodenschiene zu lösen. Die Aussparungen sind insbesondere dann vorteilhaft, wenn sich in dem Hohlraum des Grundkörpers ein Unterdruck ausgebildet hat, mit dem sich der Grundkörper an der Bodenschiene festsaugt. Indem der Nutzer - beispielsweise mit einem Finger - in eine der Aussparungen eingreift und den Grundkörper ein wenig anhebt, bricht der Unterdruck im geschlossenen Absaugraum zusammen und die Ansaugwirkung zwischen Absaugvorrichtung und Bodenschiene wird beendet. Dadurch kann die Absaugvorrichtung deutlich einfacher aus der Bodenschiene entfernt werden. Es ist im Sinne der Erfindung bevorzugt, dass der Grundkörper der Absaugvorrichtung mindestens eine Aussparung aufweist. Diese kann vorzugsweise an einer Vorderseite oder einer Rückseite angeordnet sein. Vorzugsweise kann die Absaugvorrichtung auch zwei oder mehr Aussparungen aufweisen, wobei die Aussparungen vorzugsweise an der Vorderseite und/oder der Rückseite des Grundkörpers vorliegen, weil sie dort für den Nutzer besser zugänglich sind.

In einer weiteren Ausführungsform der Erfindung ist es bevorzugt, dass der Grundkörper an seiner Unterseite mindestens eine Aussparung zur erleichterten Entfernung der Vorrichtung aus der Bodenschiene der Trockenbauwand umfasst. Vorzugsweise kann der Grundkörper zwei solcher Aussparungen aufweisen, wobei eine erste Aussparung im vorderen Bereich und eine zweite Aussparung im hinteren Bereich des Grundkörpers vorgesehen sein kann. Die Begriffe "vorne" und "hinten" sind für den Fachmann im Kontext der vorliegenden Erfindung keine unklaren Begriffe, da der hintere Bereich vorzugsweise der Bereich des Grundkörpers ist, der die Absaugöffnung aufweist. Vorzugsweise weist auch die bevorzugt geneigte Absaugöffnung in Richtung des Nutzers. Der vordere Bereich des Grundkörpers weist auf einer Oberseite eine im Wesentlichen ebene Fläche auf, die beispielsweise als Niederhaltefläche verwendet werden kann. Die Niederhaltefläche stellt vorzugsweise eine Fläche auf der Oberseite der Absaugvorrichtung dar, die dazu verwendet werden kann, die Absaugvorrichtung in der Bodenschiene der Trockenbauwand zu fixieren, indem der Grundkörper in Richtung der Bodenschiene gedrückt wird. Diese Niederhaltefunktion kann beispielsweise auch dadurch erreicht werden, dass ein schwerer Gegenstand auf die im Wesentlichen ebene Fläche gelegt wird, um die Absaugvorrichtung zu beschweren.

Der Grundkörper weist eine im Wesentlichen quaderförmige, dreidimensionale Grundform auf. Die Bodenfläche des Grundkörpers, die vorzugsweise die Unterseite des Quaders bildet, weist vorzugsweise eine im Wesentlichen rechteckige Grundfläche auf. Die Seitenflächen des Grundkörpers schließen sich vorzugsweise an die längeren Rechteckseiten der vorzugsweise rechteckigen Grundfläche der Bodenfläche des Grundkörpers an, während sich die Vorderseite und die Rückseite des Grundkörpers an die kürzeren Rechteckseiten der vorzugsweise rechteckigen Grundfläche der Bodenfläche des Grundkörpers anschließen. Die Seitenflächen liegen vorzugsweise formschlüssig an den Innenwänden der Bodenschiene der Trockenbauwand an, wobei insbesondere eine luftdichte Abdichtung zwischen den Seitenflächen des Grundkörpers und den Innenflächen der Trockenbauschiene bewirkt wird. Mit anderen Worten weist der Grundköper vorzugsweise solche Abmessungen auf, dass eine Abdichtwirkung zwischen den Seitenflächen des Grundkörpers und der Bodenschiene der Trockenbauwand erzeugt wird.

Es ist im Sinne der Erfindung bevorzugt, dass die Trockenbauschienen normiert sind. Vorzugsweise können für unterschiedliche Größen von Trockenbauschienen eigene Absaugvorrichtung bereitgestellt werden. Denkbar sind beispielsweise die Größen 3 5/8" oder 6", ohne darauf beschränkt zu sein. Die genannten Größen entsprechen beispielsweise 9,20 cm bzw. 15,24 cm und stellen vorzugsweise die Breite der Absaugvorrichtung dar.

Die Breite der Absaugvorrichtung stellt vorzugsweise den Abstand der im Wesentlichen parallelen Seitenflächen des Grundkörpers dar. Es ist im Sinne der Erfindung insbesondere bevorzugt, dass die Seitenflächen des Grundkörpers mit Seitenflächen der Bodenschiene der Trockenbauwand so zusammenwirken, dass eine luftdichte Abdichtung entsteht. Vorzugsweise ist die Vorrichtung bzw. ihr Grundkörper so positionierbar, dass sie in die Bodenschiene einer Trockenbauwand vor Bohrbeginn eingelegt werden kann. Die Abmessungen der Vorrichtung bzw. des Grundkörpers, insbesondere ihre Breite, korrespondieren daher vorzugsweise mit der Breite der Bodenschiene der Trockenbauwand. Der Begriff "korrespondieren" bedeutet im Sinne der Erfindung bevorzugt, dass die Abmessungen des Grundkörpers so auf die Abmessungen der Bodenschiene der Trockenbauwand abgestimmt sind, dass der Grundkörper in die Bodenschiene eingelegt werden kann und mit den Seitenflächen der Bodenschiene abdichtet, insbesondere dann, wenn in der Bodenschiene Flüssigkeit oder Bohrschlamm vorhanden ist.

Es ist im Sinne der Erfindung bevorzugt, dass der Hohlraum eine im Wesentlichen kreisförmige Grundfläche aufweist. Durch die im Wesentlichen kreisförmige Grundfläche weist der Hohlraum keine schwer zu reinigenden Ecken auf, in denen der Borschlamm hängenbleibt und nur schwer entfernt werden kann. Insbesondere erleichtert die im Wesentlichen kreisförmige Ausgestaltung der Grundfläche des Hohlraums eine spätere Reinigung der Absaugvorrichtung, so dass die Vorrichtung besonders einfach häufig wiederverwendet werden kann.

Es kann in einer anderen Ausführungsform der Erfindung bevorzugt sein, dass der Hohlraum einen großen Anteil der Bodenfläche der Vorrichtung umfasst und dass die Randlinien im Wesentlichen dem Verlauf der Seitenkanten der Vorrichtung folgen. Vorzugsweise kann eine Grundfläche des Hohlraums jede beliebige Form aufweisen, wobei es im Sinne der Erfindung bevorzugt ist, dass der Hohlraum in Bezug auf die Bodenfläche der Vorrichtung ein möglichst großes Volumen aufweist. Dadurch kann eine größere Fläche mit Unterdruck beaufschlagt werden, so dass die luftdichte Abdichtung des Hohlraums bzw. des geschlossenen Absaugvolumens verbessert werden kann. Wenn die Grundfläche des Hohlraums Ecken aufweist, ist es im Sinne der Erfindung bevorzugt, dass die Ecken große, vorzugsweise stumpfe Winkel zwischen 90 und 180 Grad umfassen.

In einem zweiten Aspekt betrifft die Erfindung eine Verwendung der vorgeschlagenen Absaugvorrichtung zum Absaugen von Bohrschlamm aus einer Bodenschiene einer Trockenbauwand. Die für die Absaugvorrichtung eingeführten Begriffe, Definitionen und technischen Vorteile gelten vorzugsweise für die Verwendung der Absaugvorrichtung analog.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: Ansicht einer bevorzugten Ausgestaltung der Erfindung
- Fig. 2: Ansicht einer Unterseite einer bevorzugten Ausgestaltung der Erfindung
- Fig. 3: Ansicht einer bevorzugten Ausgestaltung der Absaugvorrichtung, die in eine Trockenbauschiene eingelegt ist.

### Ausführungsbeispiele:

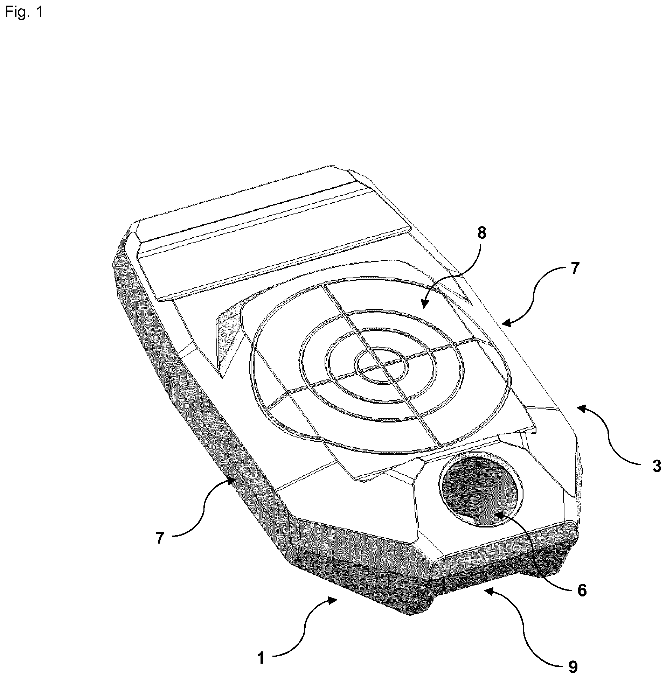

Figur 1 zeigt eine bevorzugte Ausgestaltung einer vorgeschlagenen Absaugvorrichtung (1). Dargestellt ist der Grundkörper (3) der Absaugvorrichtung (1), der vorzugsweise von einem quaderförmigen Stück Schaumstoff gebildet wird. Der Grundkörper (3) weist eine Absaugöffnung (6) auf, die mit einer Saugvorrichtung (nicht dargestellt) verbunden sein kann. In die Absaugöffnung (6) kann beispielsweise ein Saugschlauch der Saugvorrichtung eingeführt werden. Vorzugsweise kann mit dem Saugschlauch ein Unterdruck, der von der Saugvorrichtung erzeugt wird, in einen Hohlraum (5) des Grundkörpers (3) geleitet werden. Der Hohlraum (5) des Grundkörpers (3) liegt vorzugsweise auf einer Unterseite (4) der Absaugvorrichtung (1) vor. An der vorzugsweise schmaleren Vorder- und/oder Rückseite der Absaugvorrichtung (1) können Aussparungen (9) vorgesehen sein, mit denen eine Entfernung der Absaugvorrichtung (1) aus einer Bodenschiene (2) einer Trockenbauwand erleichtert werden kann, indem der Unterdruck im Hohlraum (5) des Grundkörpers (3) zerstört wird. Die längeren Seiten des Grundkörpers (3) bilden vorzugsweise die Seitenflächen (7) der Absaugvorrichtung (1). Diese Seitenflächen (7) können vorteilhafterweise so mit Innenflächen der Trockenbauschiene (2) zusammenwirken, dass der Unterdruck auf der Unterseite (4) der Absaugvorrichtung (1) und in dem Hohlraum (5) derart ist, dass mit dem Unterdruck der Saugvorrichtung Bohrschlamm aus dem Hohlraum (5) abgesaugt werden kann. Vorzugsweise dichten die Seitenflächen (7) des Grundkörpers (3) die Innenwände der Bodenschiene (2) der Trockenbauwand ab.

Auf einer Oberfläche des Grundkörpers (3) kann eine Zentrierhilfe (8) für das Aufsetzen des Kernbohrgeräts vorgesehen sein. Die Zentrierhilfe (8) ist vorzugsweise dazu eingerichtet, eine optimale, mittige Position des Kernbohrers zwischen den Wänden der Bodenschiene (2) der Trockenbauwand zu finden. Dazu umfasst die Zentrierhilfe (8) vorzugsweise einen Mittelpunkt, der gleiche Abstände zu den Seitenflächen (7) der Absaugvorrichtung (1) aufweist, sowie konzentrische Ringe, die um den Mittelpunkt der Zentrierhilfe (8) herum angeordnet sind. Die in Figur 1 dargestellte Ausführungsform der Erfindung kann beispielsweise eine Breite zwischen 15 und 16 cm aufweisen. Vorzugsweise kann die Breite der Absaugvorrichtung (1) an die Breite der Trockenbauschiene (2) angepasst sein.

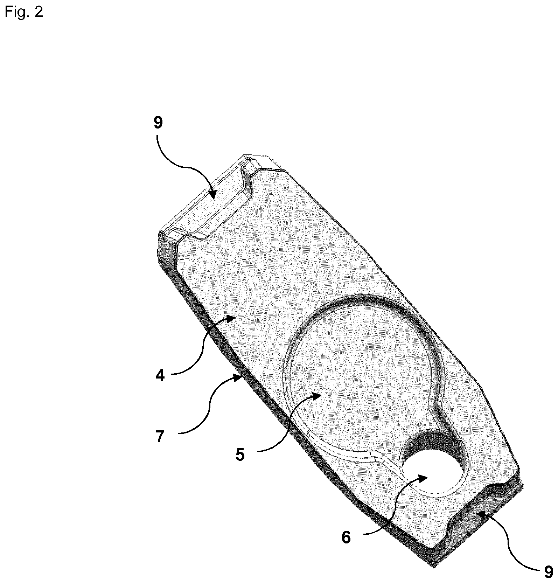

Figur 2 zeigt eine Unterseite (4) einer bevorzugten Ausgestaltung der Absaugvorrichtung (1). Die Unterseite (4) ist vorzugsweise eben ausgebildet. Sie weist eine Aussparung auf, die vorzugsweise eine kreisförmige Grundfläche aufweist. Es ist auch anders geformte Grundflächen für den Hohlraum (5) denkbar. Vorzugsweise ist der Anteil der Fläche, die den Hohlraum (5) bildet, gegenüber der Gesamtgrundfläche der Vorrichtung (1) möglichst groß, wobei vorzugsweise eine Stabilität der von dem Hohlraum (5) innerhalb der Vorrichtung (1) erzeugten Wände nicht negativ beeinflusst wird. Diese Aussparung bildet einen Hohlraum (5), dessen Unterseite von der Bodenschiene (2) einer Trockenbauwand gebildet wird, wenn die Absaugvorrichtung (1) in eine solche Trockenbauschiene (2) eingelegt ist. Durch den Unterdruck der Saugvorrichtung, mit der die Absaugvorrichtung (1) über die Absaugöffnung (6) verbunden sein kann, wird die Absaugvorrichtung (1) an die Bodenschiene (2) angesaugt, so dass ein geschlossenes Absaugvolumen gebildet wird, aus dem heraus Bohrschlamm gesaugt werden kann. Der Hohlraum (5) ist vorzugsweise mit der Absaugöffnung (6) verbunden, so dass der Unterdruck der Saugvorrichtung durch die Absaugöffnung (6) in den Hohlraum (5) des Grundkörpers (3) gelangen kann. Auf der Unterseite (4) des Grundkörpers (3) können offene Aussparungen (9) angeordnet sein, mit denen die Entfernung der Vorrichtung (1) aus der Bodenschiene (2) erleichtert werden kann.

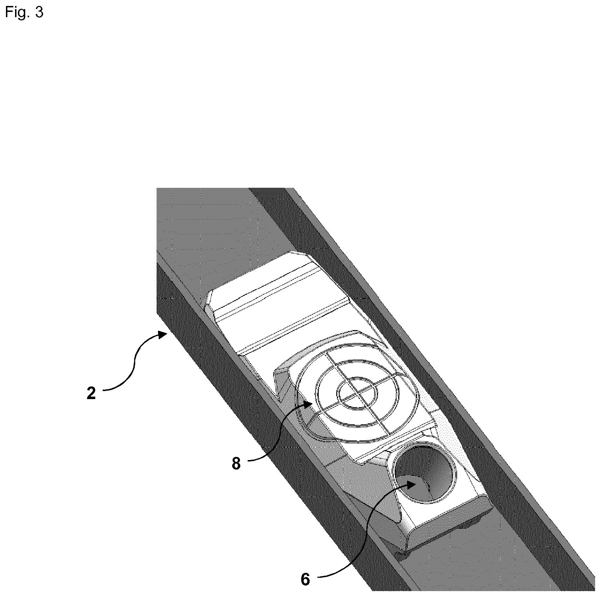

Figur 3 zeigt eine Ansicht einer bevorzugten Ausgestaltung der Absaugvorrichtung (1), die in eine Trockenbauschiene (2) eingelegt ist. Die Seitenflächen (7) der Absaugvorrichtung (1) schließen vorzugsweise formschlüssig mit Innenwänden der Bodenschiene (2) ab, so dass zwischen dem Grundkörper (3) der Absaugvorrichtung (1) und der Bodenschiene (2) eine Abdichtung entsteht. Ferner sind in Figur 3 die Aussparung (9), die Zentrierhilfe (8) und die Absaugöffnung (6) der Absaugvorrichtung (1) zu sehen. Die in Figur 3 dargestellte Ausführungsform der Absaugvorrichtung (1) kann beispielsweise eine Breite zwischen 9 und 10 cm aufweisen.

### Bezugszeichenliste

1 Vorrichtung bzw. Absaugvorrichtung
2 Bodenschiene
3 Grundkörper
4 Unterseite des Grundkörpers
5 Hohlraum
6 Absaugöffnung
7 Seitenflächen des Grundkörpers
8 Zentrierhilfe
9 Aussparung

## Patentansprüche

1. Vorrichtung (1) zum Absaugen von Bohrschlamm aus einer Bodenschiene (2) einer Trockenbauwand
**dadurch gekennzeichnet, dass**
die Vorrichtung (1) einen Grundköper (3) aufweist, wobei der Grundkörper (3) an einer Unterseite (4) einen Hohlraum (5) aufweist, der mit einem Unterdruck beaufschlagbar ist, so dass der im Hohlraum (5) anfallende Bohrschlamm mit einer Saugvorrichtung aus dem Hohlraum (5) absaugbar ist, wobei der Grundkörper (3) ferner eine Absaugöffnung (6) aufweist, die in den Hohlraum (5) des Grundkörpers (3) mündet.

2. Vorrichtung (1) nach Anspruch 1
**dadurch gekennzeichnet, dass**
der Grundköper (1) Seitenflächen (7) aufweist, wobei der Grundköper (3) solche Abmessungen aufweist, dass eine Abdichtwirkung zwischen den Seitenflächen (7) des Grundkörpers und der Bodenschiene (2) der Trockenbauwand erzeugt wird.

3. Vorrichtung (1) nach Anspruch 1 oder 2
**dadurch gekennzeichnet, dass**
der Grundkörper (3) einen Schaumstoff umfasst.

4. Vorrichtung (1) nach einem der vorhergehenden Ansprüche
**dadurch gekennzeichnet, dass**
der der Hohlraum (5) eine im Wesentlichen kreisförmige Grundfläche aufweist.

5. Vorrichtung (1) nach einem der vorhergehenden Ansprüche
**dadurch gekennzeichnet, dass**
die Absaugöffnung (6) in Bezug auf eine im Wesentlichen plane Unterseite (4) des Grundkörpers (3) geneigt ausgebildet ist.

6. Vorrichtung (1) nach einem der vorhergehenden Ansprüche
**dadurch gekennzeichnet, dass**
auf einer Oberseite des Grundkörpers (3) eine Zentrierhilfe (8) für eine Positionierung eines Kernbohrgeräts angeordnet ist.

7. Vorrichtung (1) nach einem der vorhergehenden Ansprüche
**dadurch gekennzeichnet, dass**
der Grundkörper (3) an seiner Unterseite (4) mindestens eine Aussparung (9) zur erleichterten Entfernung der Vorrichtung (1) aus der Bodenschiene (2) der Trockenbauwand umfasst.

8. Verwendung einer Vorrichtung (1) nach einer der vorhergehenden Ansprüche zum Absaugen von Bohrschlamm aus einer Bodenschiene (2) einer Trockenbauwand.
